# DEMANDE DE BREVET EUROPEEN

(11) **EP 1 219 179 A2**
(43) Date de publication de la demande: **03.07.2002**
(21) Numéro de dépôt: 02356001.4
(22) Date de dépôt: 02.01.2002
(51) Int. Cl.: A23L 1/025, A23L 3/37, A23B 7/05, A23P 1/00

(54) **Procédé de traitement d'une denrée alimentaire à l'état surgelé**

(30) Priorité: 02.01.2001 FR 0100016
(71) Demandeur: Etablissements Garnier, 69780 Mions (FR)
(72) Inventeur: Garnier, Patrick, 69110 Sainte Foy Les Lyon (FR)
(74) Mandataire: Myon, Gérard Jean-Pierre

(57) **Abrégé**

Procédé de traitement d'une denrée alimentaire à l'état surgelé, dans lequel :
- on dispose ladite denrée alimentaire à l'état surgelé, dans une enceinte mise vide, par actionnement de moyens de mise sous vide ;
- on prépare une solution comportant de l'eau et un agent de liaison alimentaire ;
- on chauffe cette solution, de façon à la porter au-dessus de 70°C ;
- on réalise une micronisation de cette solution chaude, de manière à former une solution chaude micronisée et
- on admet la solution chaude micronisée dans l'enceinte, immédiatement après avoir arrêté lesdits moyens de mise sous vide, de manière à faire pénétrer au moins partiellement ladite solution micronisée chaude dans la denrée alimentaire.

## Description

La présente invention concerne un procédé de traitement d'une denrée alimentaire à l'état surgelé.

Les pressions dont il est fait mention ci-dessous sont des pressions absolues.

L'invention trouve plus particulièrement, mais non exclusivement, son application à des denrées alimentaires, telles que des fruits et légumes.

Ces denrées, à l'état surgelé, ont subi un refroidissement rapide; de sorte que l'eau qui y était contenue originellement s'est transformée en cristaux de glace de faible taille.

L'invention se propose de mettre en oeuvre un procédé de traitement d'une telle denrée, qui permet d'augmenter les qualités gustatives de celle-ci sans cependant induire de déformation inacceptable de sa structure.

A cet effet, elle a pour objet un procédé de traitement d'une denrée alimentaire à l'état surgelé, dans lequel :
- on dispose ladite denrée alimentaire à l'état surgelé, dans une enceinte sous vide, par actionnement de moyens de mise sous vide ;
- on prépare une solution comportant de l'eau et un agent de liaison alimentaire ;
- on chauffe cette solution, de façon à la porter au-dessus de 70°C, de préférence au-dessus de 80°C ;
- on réalise une micronisation de cette solution chaude, de manière à former une solution chaude micronisée et
- on admet la solution chaude micronisée dans l'enceinte, immédiatement après avoir arrêté lesdits moyens de mise sous vide, de manière à faire pénétrer au moins partiellement ladite solution micronisée chaude dans la denrée alimentaire.

Placer sous vide l'enceinte de réception de la denrée alimentaire induit un dégazage de cette dernière. En d'autres termes, l'air qui y était initialement contenu est aspiré par les moyens de mise sous vide, de sorte que cet air ainsi chassé permet de libérer le volume intérieur de la denrée alimentaire. En revanche, étant donné que cette denrée est à l'état surgelé, cette mise sous vide de l'enceinte n'implique pas une modification sensible de la structure de la denrée, puisque les cristaux de glace qu'elle contient lui confèrent une tenue mécanique satisfaisante.

Avantageusement, on porte l'enceinte sous vide à une pression inférieure à 40 mbar, de préférence à 20 mbar.

La solution, contenant de l'eau ainsi qu'un agent de liaison alimentaire, est réalisée de façon classique. L'agent de liaison alimentaire est avantageusement de la pectine. Il est possible de rajouter, à cette solution, du sucre et/ou un acidifiant, tel de l'acide citrique.

On chauffe la solution, éventuellement sucrée, décrite ci-dessus, de façon à la porter à une température supérieure à 70°C, de préférence à 80°C. Cette solution, une fois chauffée, est alors traitée en vue de la micronisation de ses particules constitutives.

Cette opération de micronisation est par exemple réalisée dans un homogénéisateur, opérant à très haute pression, voisine de 2 000 bars. A cet effet, on peut faire appel à l'appareil commercialisé par la société italienne NIRO SOAVI, sous la référence commerciale PANDA 2K. Ceci conduit à l'obtention d'une solution chaude micronisée, qui est ensuite admise dans l'enceinte recevant la denrée alimentaire à l'état surgelé.

Conformément à l'invention, on procède à l'admission de cette solution micronisée, après avoir arrêté les moyens de mise sous vide de l'enceinte. Ces derniers, de type classique, sont par exemple des pompes à vide. Une telle mesure permet d'éviter l'entraînement, par les moyens de mise sous vide, des particules constitutives de la solution micronisée.

De façon avantageuse, on admet la solution micronisée dans l'enceinte, immédiatement après avoir arrêté les moyens de mise sous vide. Ceci signifie qu'un éventuel temps de latence, séparant cet arrêt et cette admission, doit être réduit, par exemple voisin de quelques dizaines de secondes.

Selon une autre caractéristique avantageuse de l'invention, on actionne les moyens de mise sous vide, de manière à induire une descente progressive de la pression dans l'enceinte, puis on maintient la pression de l'enceinte sensiblement constante, avant d'arrêter les moyens de mise sous vide. Ceci permet de garder quasiment intacte la forme de la denrée alimentaire. Ces phases de descente progressive, puis de stabilisation, sont opérées pendant environ 2 à 8 minutes, puis 5 à 10 minutes.

L'arrivée de la solution chaude micronisée dans l'enceinte induit un réchauffement de la denrée surgelée, lorsque les particules de la solution précitée arrivent au voisinage de sa surface extérieure. Ce phénomène provoque alors la fonte des cristaux de glace initialement présents dans la denrée surgelée.

Au fur et à mesure de cette fonte, il se produit un phénomène d'échange entre, d'une part, la glace des cristaux et, d'autre part, la solution micronisée arrivant au contact de cette denrée. Dans le cas d'une solution sucrée, le passage de la cette dernière vers l'intérieur de la denrée contribue à augmenter la teneur en sucre de cette denrée.

Lors de l'admission de la solution micronisée, la pression régnant dans l'enceinte remonte, étant donné que les moyens de mise sous vide ont été arrêtés. Selon une caractéristique avantageuse de l'invention, on stoppe l'admission de la solution micronisée à l'intérieur de l'enceinte, lorsque la pression régnant dans cette enceinte est voisine de la pression atmosphérique. Ceci permet l'ouverture de l'enceinte, afin d'en effectuer la vidange.

Selon une variante supplémentaire de l'invention, une fois la solution micronisée, éventuellement sucrée, introduite au moins partiellement dans la denrée, on place à nouveau l'enceinte sous vide, puis on réalise une autre solution micronisée, riche en calcium, que l'on admet à l'intérieur de l'enceinte, après avoir arrêté à nouveau les moyens de mise sous vide.

A cet effet, on prépare tout d'abord une solution riche en calcium, qui est de type connu dans l'industrie alimentaire. Puis, on procède à une micronisation de cette solution riche en calcium, de façon analogue à ce qui a été décrit précédemment en référence à la solution sucrée. Ceci permet d'induire, au sein de la denrée alimentaire, une réaction entre le calcium et l'agent de liaison, tel que la pectine. Cette réaction chimique est avantageuse en termes de tenue mécanique de la denrée ainsi traitée, puisqu'elle permet de durcir cette dernière.

On soumet avantageusement la denrée alimentaire à une opération de rinçage, après la phase d'admission de l'autre solution micronisée. Ce rinçage permet d'enlever le goût désagréable lié à l'emploi du calcium.

L'invention permet de réaliser les objectifs précédemment mentionnés. En effet, traiter une denrée alimentaire à l'état surgelé confère à cette dernière une tenue mécanique satisfaisante. De la sorte, il est possible de soumettre cette denrée surgelée à une mise sous vide relativement poussée, autorisant ainsi un dégazage important de cette denrée. Ceci garantit alors une entrée massive de la solution micronisée dans le volume intérieur, ainsi libéré, de la denrée.

Admettre la solution micronisée dans l'enceinte, après avoir arrêté les moyens de mise sous vide, permet de s'affranchir de l'entraînement des particules de solution, par les moyens de mise sous vide. Par ailleurs, un tel arrêt réduit les contraintes mécaniques s'exerçant sur la denrée, au fur et à mesure de la fonte des cristaux qui étaient initialement présents dans cette dernière.

## Revendications

1. Procédé de traitement d'une denrée alimentaire à l'état surgelé, dans lequel :
- on dispose ladite denrée alimentaire à l'état surgelé, dans une enceinte sous vide, par actionnement de moyens de mise sous vide ;
- on prépare une solution comportant de l'eau et un agent de liaison alimentaire ;
- on chauffe cette solution, de façon à la porter au-dessus de 70°C ;
- on réalise une micronisation de cette solution chaude, de manière à former une solution chaude micronisée et
- on admet la solution chaude micronisée dans l'enceinte, immédiatement après avoir arrêté lesdits moyens de mise sous vide, de manière à faire pénétrer au moins partiellement ladite solution micronisée chaude dans la denrée alimentaire.

2. Procédé selon la revendication 1, **caractérisé en ce qu'**on chauffe la solution, de façon à la porter au-dessus de 80°C.

3. Procédé selon la revendication 1 ou 2, **caractérisé en ce qu'**on porte l'enceinte sous vide à une pression inférieure à 40 mbar, de préférence à 20 mbar.

4. Procédé selon l'une des revendications 1 à 3, **caractérisé en ce que** ladite solution comporte également du sucre et/ou un acidifiant.

5. Procédé selon l'une quelconque des revendications précédentes, **caractérisé en ce que** l'agent de liaison alimentaire est de la pectine.

6. Procédé selon l'une quelconque des revendications précédentes, **caractérisé en ce qu'**on actionne les moyens de mise sous vide, de manière à induire une descente progressive de la pression dans l'enceinte, puis on maintient la pression de l'enceinte sensiblement constante, avant d'arrêter les moyens de mise sous vide.

7. Procédé selon l'une quelconque des revendications précédentes, **caractérisé en ce qu'**on stoppe l'admission de la solution micronisée à l'intérieur de l'enceinte, lorsque la pression régnant dans cette enceinte est voisine de la pression atmosphérique.

8. Procédé selon l'une quelconque des revendications précédentes, **caractérisé en ce que**, une fois la solution micronisée introduite, au moins partiellement, dans la denrée, on place à nouveau l'enceinte sous vide, puis on réalise une autre solution micronisée, riche en calcium, que l'on admet à l'intérieur de l'enceinte, après avoir arrêté à nouveau les moyens de mise sous vide.

9. Procédé selon la revendication 8, **caractérisé en ce qu'**on soumet la denrée alimentaire à une opération de rinçage, après la phase d'admission de l'autre solution micronisée.
